# EUROPÄISCHE PATENTSCHRIFT

(11) **EP 0 846 716 B1**
(45) Veröffentlichungstag und Bekanntmachung des Hinweises auf die Patenterteilung: **26.01.2000**
(21) Anmeldenummer: 97117644.1
(22) Anmeldetag: 11.10.1997
(51) Int. Cl.: C08G 77/24, C09D 183/08, D06M 15/657

(54) **Fluoralkylfunktionelle Organopolysiloxane enthaltende Zusammensetzungen auf Wasser/Alkohol-Basis, Verfahren zu deren Herstellung sowie deren Verwendung**
Water/alcohol-based compositions containing fluoroalkyl-functional organopolysiloxanes, process for their preparation and their use
Compositions à base d'un mélange d'alcool et d'eau contenant des organopolysiloxanes à fonctions fluoroalkyle, leur procédé de préparation et leur utilisation

(30) Priorität: 03.12.1996 DE 19649955
(43) Veröffentlichungstag der Anmeldung: 10.06.1998
(73) Patentinhaber: Degussa-Hüls Aktiengesellschaft, 60287 Frankfurt am Main (DE)
(72) Erfinder: Standke, Burkhard, Dr., 79540 Lörrach (DE); Edelmann, Roland, 79664 Wehr (DE); Frings, Albert-Johannes, Dr., 79618 Rheinfelden (DE); Horn, Michael, Dr., 79618 Rheinfelden (DE); Jenkner, Peter, Dr., 79618 Rheinfelden (DE); Laven, Ralf, Dr., 79739 Schwörstadt (DE); Mack, Helmut, Dr., 79618 Rheinfelden (DE); Monkiewicz, Jaroslaw, 79618 Rheinfelden (DE)

(56) Entgegenhaltungen:
- EP-A- 0 629 673
- WO-A-96/06895
- US-A- 5 266 222

## Beschreibung

Die Erfindung betrifft Fluoralkyl-funktionelle Organopolysiloxan-haltige Zusammensetzungen auf Wasser/Alkohol-Basis, ein Verfahren zu deren Herstellung sowie deren Verwendung.

Organosilane der allgemeinen Formel R'-Si(R'')₃, mit R' als fluoriertem organischen Rest und R'' als Chlor- oder Methoxy- bzw. Ethoxy-Rest, finden vielfältige Anwendungen, z. B. zum Aufbringen hydrophob sowie oleophob wirkender Schichten auf Oberflächen.

Es ist bekannt, daß öl- und wasserabweisende Beschichtungen von Oberflächen, meist Glasoberflächen, mit Hilfe von Fluoralkylalkoxysilanen sowie Fluoralkylchlorsilanen hergestellt werden. Die Beschichtungen können beispielsweise zur schmutzabweisenden Ausrüstung von Flachglas verwendet werden. Die beschriebenen Verfahren basieren auf Sol-Gel-Prozessen, wobei zusammen mit dem Fluoralkylsilan feinste anorganische Partikel erzeugt und eingesetzt werden. Die Applikation solcher Systeme ist technisch aufwendig und verwendet meist komplexe organische Lösemittelgemische und Zusatzstoffe (EP-OS 0 658 525, EP-OS 0 629 673).

Auch werden große Mengen organischer Lösemittel zur Erzeugung von öl- und wasserabweisenden Beschichtungen eingesetzt, so ist beispielsweise aus der US 5 424 130 ein Ethanol-Gehalt von 52 Gew.-% bekannt.

Bei den beschriebenen Verfahren wirken sich einerseits die komplizierten Applikationsverfahren und andererseits die Verwendung organischer Lösemittel negativ aus. Als Lösemittel werden bei einigen Verfahren sogar ökologisch sehr problematische Stoffe, wie chlorierte Kohlenwasserstoffe oder Fluorkohlenwasserstoffe, in erheblicher Konzentration eingesetzt (EP-OS 0 491 251, EP-OS 0 493 747).

Es bestand daher die Aufgabe, silanbasierende Systeme zu entwickeln, welche in einem wäßrigen System löslich sind und mit denen man in einem einfach auszuführenden Imprägnierverfahren eine gleichzeitig hydrophobe wie auch oleophobe Beschichtung auf Substraten erzeugen kann. Ein besonderes Anliegen der vorliegenden Erfindung war es, solche Systeme für eine vereinfachte Behandlung von Substraten, wie beispielsweise Glas - z. B. Glasfasern, Füllstoffe und Pigmente, Metalle, Kunststoff, Textilfasern - einschließlich Baumwolle, Holz, Papier, Minaralfasern sowie mineralische Baustoffe - z. B. Kalksandstein, Beton, Ziegel oder Keramik, bereitzustellen.

Die gestellte Aufgabe wird erfindungsgemäß entsprechend den Angaben der Patentansprüche gelöst.

Überraschenderweise wurde gefunden, daß Cokondensate aus Aminoalkylalkoxysilanen und Fluoralkylalkoxysilanen unter Zusatz von Säuren wasserlösliche Substanzen bilden und solche Lösungen - nachfolgend auch kurz Zusammensetzungen genannt - sich in hervorragender Weise zur gleichzeitigen hydrophoben wie auch oleophoben Ausrüstung eingangs beschriebener Substrate eignen. Solche Organopolysiloxan-haltige Zusammensetzungen auf Wasser/Alkohol-Basis, welche Si-gebundene Fluoralkyl-Funktionen enthalten, sind dann als homogene, klare und über mehrere Wochen stabile Lösungen zugänglich, wenn man a Mole wasserlöslicher Aminosilane der allgemeinen Formel II und b Mole Fluoralkyl-funktioneller Organosilane der allgemeinen Formel III und gegebenenfalls c sowie gegebenenfalls d Mole nicht wasserlöslicher Organosilane der allgemeinen Formeln IV sowie V in einem molaren Verhältnis M = [a/(b+c+d)] ≥ 0,1 mit a>0, b>0, c≥0, d≥0 mischt, das Organosilangemisch mit Wasser oder einem Wasser/Säure-Gemisch und/oder einem Wasser-/Säure/Alkohol-Gemisch vermischt, wobei man die Säuremenge geeigneterweise so wählt, daß die Reaktionsmischung einen pH-Wert im Bereich von 1 bis 8 aufweist. Geeigneterweise stellt man nach einer Reaktionszeit von 0,5 bis 24 Stunden, vorzugsweise 1 bis 12 Sunden, besonders vorzugsweise nach 2 bis 6 Stunden, die Wirkstoffkonzentration durch Zugabe von Alkohol oder Wasser oder einem Alkohol/Wasser-Gemisch ein. So hergestellte Organosilanpolykondensate besitzen nach chemischer Plausibilität die in Formel I (siehe unten) wiedergegebene Näherungsstruktur. Eine vollständige Strukturaufklärung mit gängigen Methoden der Polymeranalytik gelingt aufgrund der sehr hohen Reaktivität der organofunktionellen Siloxane nicht, so ist auch ein geringer Anteil an Hydroxygruppen an Stelle der Si-gebundenen Alkoxygruppen in Verbindungen gemäß Formel I nicht auszuschließen. Geeigneterweise beträgt der Gehalt an Fluoralkylgruppen-enthaltenden Organopolysiloxanen als Wirkstoff in der erfindungsgemäßen Zusammensetzung 0,005 bis 85 Gew.-%, vorzugsweise 0,01 bis 10 Gew.-%, besonders vorzugsweise 0,5 bis 2 Gew.-%, wobei der Gehalt an freiem Alkohol - d. h. der Alkohol-Anteil, der in der Zusammensetzung als Medium enthalten ist - vorzugsweise 3 bis 50 Gew.-%, besonders vorzugsweise mehr als 5 Gew.-% bis 50 Gew.-%, beträgt.

Gegenstand der vorliegenden Erfindung ist daher eine Fluororgano-funktionelle Organopolysiloxan-haltige Zusammensetzung auf Wasser/Alkohol-Basis, die dadurch gekennzeichnet ist,
daß die Zusammensetzung Organopolysiloxane der allgemeinen Formel I

RO[Si(A)(CH₃)_{z}(OR)_{1-z}O]ₐ[Si(B)(R²)_{y}(OR)_{1-y}O]_{b}[Si(C)(CH₃)O]_{c}[Si(D)(OR)O]_{d}R•(HX)ₑ (I),

worin A einen Aminoalkyl-Rest, abgeleitet aus der allgemeinen Formel II

   H₂N(CH₂)_{f}(NH)_{g}(CH₂)ₕSi(OR)_{3-z}(CH₃)_{z} (II),

   wobei 0≤f≤6, g=0 falls f=0 und g=1 falls f>0, 0≤h≤6 und 0≤z≤1 sind,
und B einen Fluororgano-Rest, abgeleitet aus Tridecafluor-1,1,2,2-tetrahydrooctyl-1-trimethoxysilan oder Tridecafluor-1,1,2,2-tetrahydrooctyl-1-triethoxysilan oder aus der allgemeinen Formel III

   R¹-Y-(CH₂)₂Si(R²)_{y}(OR)_{3-y} (III),

   wobei R¹ eine mono-, oligo- oder perfluorierte Alkyl-Gruppe mit 1 bis 9 C-Atomen oder eine mono-, oligo- oder perfluorierte Aryl-Gruppe oder eine R^{f}CH₂CH₂(C=O)-Gruppe mit R^{f} = CₙF₂ₙ₊₁ und n = 2 bis 18, Y eine CH₂-, O- oder S-Gruppe, R² eine lineare, verzweigte oder cyclische Alkyl-Gruppe mit 1 bis 8 C-Atomen oder eine Aryl-Gruppe bedeuten und 0≤y≤1 ist,
und C einen Alkyl-Rest, abgeleitet aus der allgemeinen Formel IV

   R³-Si(CH₃)(OR)₂ (IV),
und D ebenfalls einen Alkyl-Rest, jedoch abgeleitet aus der allgemeinen Formel V

   R³-Si(OR)₃ (V),

   wobei R³ in den vorangegangenen Formeln eine lineare, verzweigte oder cyclische Alkyl-Gruppe mit 1 bis 8 C-Atomen bedeutet, R³ in den vorangegangenen Formeln jeweils gleich oder verschieden ist,
   R in den vorangegangenen Formeln eine lineare, verzweigte oder cyclische Alkyl-Gruppe mit 1 bis 8 C-Atomen oder eine Aryl-Gruppe bedeutet und R in den vorangegangenen Formeln jeweils gleich oder verschieden ist,
und HX eine Säure darstellen, wobei X ein anorganischer oder organischer Säure-Rest ist,
wie z. B. Chlorid, Nitrat oder Acetat,
und 0≤y≤1, 0≤z≤1, a>0, b>0, c≥0, d≥0, e≥0 und (a+b+c+d)≥2, vorzugsweise (a+b+c+d)≥4, sind,
enthält, wobei das molare Verhältnis M = [a/(b+c+d)]≥0,1 ist und der Gehalt an Fluororgano-funktionellen Wirkstoffen in der Zusammensetzung 0,005 Gew.-% bis 85 Gew.-% beträgt.

Geeigneterweise enthält die erfindungsgemäße Zusammensetzung eine einwertige anorganische und/oder organische Säure und/oder deren Folgeprodukte, wobei die Zusammensetzung vorzugsweise einen pH-Wert zwischen 1 und 8, besonders vorzugsweise einen pH-Wert zwischen 1 und 6, ganz besonders vorzugsweise einen pH-Wert zwischen 1 und 5, besitzt. Unter dem Begriff Folgeprodukte sollen an dieser Stelle Verbindungen wie Alkalihalogenide, insbesondere Natrium- oder Kaliumchlorid, Alkaliacetate, Alkaliformiate, Alkalinitrate, oder Verbindungen der Aminogruppierungen in den Organopolysiloxanen mit anorganischen oder organischen Säure-Resten, wie sie der allgemeinen Formel I zu entnehmen sind, verstanden werden.

Gegenstand der vorliegenden Erfindung ist auch eine Fluororgano-funktionelle Organopolysiloxan-haltige Zusammensetzung auf Wasser/Alkohol-Basis, die erhältlich ist durch
- Mischen wasserlöslicher Organosilane der allgemeinen Formel II

   H₂N(CH₂)_{f}(NH)_{g}(CH₂)ₕ- Si(CH₃)_{z}(OR)_{3-z} (II),

   worin 0≤f≤6, g=0 falls f=0 und g=1 falls f>1, 0≤h≤6, 0≤z≤1 und
   R eine lineare, verzweigte oder cyclische Alkyl-Gruppe mit 1 bis 8 C-Atomen oder Aryl-Gruppe sind, mit Tridecafluor-1,1,2,2-tetrahydrooctyl-1-trimethoxysilan oder mit Tridecafluor-1,1,2,2-tetrahydrooctyl-1-triethoxysilan oder mit Fluororgano-funktionellen Organosilanen der allgemeinen Formel III

   R¹-Y-(CH₂)₂Si(R²)_{y}(OR)_{3-y} (III),

   worin R¹ eine mono-, oligo- oder perfluorierte Alkyl-Gruppe mit 1 bis 9 C-Atomen oder eine mono-, oligo- oder perfluorierte Aryl-Gruppe oder eine R^{f}CH₂CH₂(C=O)-Gruppe mit R^{f} = CₙF₂ₙ₊₁ und n = 2 bis 18, Y eine CH₂-, O- oder S-Gruppe, R² eine lineare, verzweigte oder cyclische Alkyl-Gruppe mit 1 bis 8 C-Atomen oder eine Aryl-Gruppe und R eine lineare, verzweigte oder cyclische Alkyl-Gruppe mit 1 bis 8 C-Atomen oder eine Aryl-Gruppe darstellen und 0≤ y≤1 ist,
   und gegebenenfalls Organosilane der allgemeinen Formel IV

   R₃-Si(CH₃)(OR)₂ (IV),

   und/oder Organosilane der allgemeinen Formel V

   R³-Si(OR)₃ (V),

   worin R³ hier und in der vorangegangenen Formel eine lineare, verzweigte oder cyclische Alkyl-Gruppe mit 1 bis 8 C-Atomen bedeutet, R³ hier und in der vorangegangenen Formel jeweils gleich oder verschieden ist, R hier und in der vorangegangenen Formel eine lineare, verzweigte oder cyclische Alkyl-Gruppe mit 1 bis 8 C-Atomen oder eine Aryl-Gruppe bedeutet und R jeweils gleich oder verschieden ist,
- in dem molaren Verhältnis M = [a/(b+c+d)]≥0,1 mit a>0, b>0, c≥0, d≥0,
   wobei a die Summe der Molzahlen der Organosilane gemäß Formel II, b die Summe der Molzahlen der Organosilane gemäß Formel III sowie gegebenenfalls c die Summe der Molzahlen der Organosilane gemäß Formel IV sowie d gegebenenfalls die Summe der Molzahlen der Organosilane gemäß Formel V sind,
- Versetzen des Gemisches mit Wasser oder einem Wasser/Säure-Gemisch und/oder einem Wasser/Säure/Alkohol-Gemisch und
- Einstellen des pH-Wertes der Reaktionsmischung auf einen Wert zwischen 1 und 8.

Gegenstand der vorliegenden Erfindung ist ferner ein Verfahren zur Herstellung einer Fluororgano-funktionellen Polysiloxan-haltigen Zusammensetzung, das dadurch gekennzeichnet ist, daß man
- a Mol wasserlösliche Organosilane der allgemeinen Formel II,
   b Mol Organosilane der allgemeinen Formel III oder Tridecafluor-1,1,2,2-tetrahydrooctyl-1-trimethoxysilan oder Tridecafluor-1,1,2,2-tetrahydrooctyl-1-triethoxysilan sowie gegebenenfalls
   c Mol Organosilane der allgemeinen Formeln IV und/oder gegebenenfalls
   d Mol Organosilane der allgemeinen Formel V
- in dem molaren Verhältnis 0,1 ≤ [a/(b+c+d)] mit a>0, b>0, c≥0, d≥0 mischt,
- das Organosilangemisch mit Wasser oder einem Wasser/Säure-Gemisch und/oder einem Wasser/Säure/Alkohol-Gemisch vermischt,
   wobei man die Säuremenge so wählt, daß die Reaktionsmischung einen pH-Wert im Bereich von 1 bis 8 aufweist,
- und nach einer Reaktionszeit von 0,5 bis 24 Stunden, die Wirkstoffkonzentration durch Zugabe von Alkohol oder Wasser oder einem Alkohol/Wasser-Gemisch einstellt.

Im allgemeinen führt man das erfindungsgemäße Verfahren wie folgt aus:

Zunächst kann man die einzusetzenden Alkoxysilane gemäß der allgemeinen Formeln II und III mischen, gegebenenfalls kann man zusätzlich auch Alkoxysilane der allgemeinen Formeln IV und/oder V einsetzen. Anschließend kann man das Gemisch mit Wasser einer Cokondensation unterziehen, danach Säure oder ein Alkohol/Säure-Gemisch hinzugeben, wobei die Säuremenge geeigneterweise so gewählt wird, daß in der Reaktionsmischung ein pH-Wert zwischen 1 und 8 resultiert und die Alkoholmenge so gewählt wird, daß die Viskosität der resultierenden Reaktionsmischung einen Wert von 50 000 mPa·s nicht überschreitet. Das Überschreiten der Viskositätsgrenze führt im allgemeinen nicht zu Einschränkungen der prinzipiellen Wirksamkeit der beschriebenen Organopolysiloxanlösungen, kann jedoch verfahrenstechnische Probleme zur Folge haben. So hergestellte Produkte sind in der Regel wasserlösliche, in konzentrierter Form vorliegende, Fluoralkylgruppen-enthaltende Organopolysiloxanlösungen.

Alternativ kann man ein Cokondensat auch direkt durch Eintrag der Alkoxysilanmischung in ein Wasser/Säure- oder ein Wasser/Alkohol/Säure-Gemisch und Umsetzung der Komponenten erhalten. Sollte es erforderlich sein, den pH-Wert nachträglich auf einen Wert zwischen 1 und 8 einzustellen, so ist eine einbasige Säure besonders geeignet. Die erfindungsgemäßen Zusammensetzungen weisen vorzugsweise einen pH-Wert zwischen 1 und 8, besonders vorzugsweise einen pH-Wert zwischen 1 und 6, ganz besonders vorzugsweise einen pH-Wert zwischen 1 und 5, auf. Geeigneterweise enthalten diese eine einwertige anorganische und/oder organische Säure und/oder deren Folgeprodukte. Unter Folgeprodukten versteht man hier Verbindungen wie Alkalihalogenide, insbesondere Natrium- oder Kaliumchlorid, Alkaliacetate, Alkaliformiate, Alkalinitrate oder Verbindungen der Aminogruppierungen in den Organopolysiloxanen mit anorganischen oder organischen Säure-Resten, wie sie der allgemeinen Formel I zu entnehmen sind.
Die erfindungsgemäßen Zusammensetzungen sind im wesentlichen frei von bedenklichen organischen Lösemitteln, enthalten aber begrenzte Mengen an Alkoholen, insbesondere Methanol und/oder Ethanol.

Das Verfahren zur Herstellung der erfindungsgemäßen Zusammensetzungen kann, wie nachfolgend im einzelnen beschrieben, durchgeführt werden.

Vorzugsweise werden beim erfindungsgemäßen Verfahren zunächst wasserlösliche Organosilane der allgemeinen Formel II mit nicht wasserlöslichen Organosilanen der allgemeinen Formeln III gegebenenfalls mit solchen der allgemeinen Formeln IV und/oder V gemischt. Insbesondere setzt man folgende Organosilane erfindungsgemäß ein:
- Für Organosilane der allgemeinen Formel II bevorzugt man Aminopropyltriethoxysilan oder Aminopropyltrimethoxysilan oder Aminopropylmethyldiethoxysilan oder Aminopropylmethyldimethoxysilan oder deren Gemische.
- Für Fluoralkyl-funktionelle Organosilane der allgemeinen Formel III bevorzugt man solche Verbindungen, die CF₃(CF₂)₇-, CF₃(C₆H₄)-, C₆F₅- oder R^{f}CH₂CH₂(C=O)- mit R^{f} = CₙF₂ₙ₊₁ und n = 2 bis 18 als Gruppe R¹ enthalten, so wie sie beispielsweise aus der noch nicht veröffentlichten deutschen Patentanmeldung mit der Nr. 196 44 561.2 hervorgehen. Besonders bevorzugt sind Tridecafluor-1,1,2,2-tetrahydrooctyl-1-trimethoxysilan oder Tridecafluor-1,1,2,2-tetrahydrooctyl-1-triethoxysilan oder entsprechende Gemische.
- Für Organosilane der allgemeinen Formel IV bevorzugt man Dimethyldimethoxysilan, Dimethyldiethoxysilan, Propylmethyldimethoxysilan oder Propylmethyldiethoxysilan oder deren Gemische.
- Für Organosilane der allgemeinen Formel V bevorzugt man Propyltrimethoxysilan, Propyltriethoxysilan, Isobutyltrimethoxysilan oder Isobutyltriethoxysilan, Oktyltrimethoxysilan oder Oktyltriethoxysilan oder deren Gemische.

Geeigneterweise genügt das molare Verhältnis der hier eingesetzten Organosilane der Beziehung 0,1≤[a/(b+c+d)] , vorzugsweise 0,5≤[a/(b+c+d)]≤6000 , besonders vorzugsweise 1≤[a/(b+c+d)]≤3 .

Anschließend wird das Reaktionsgemisch einer Cokondensationsreaktion vorzugsweise mit 0,5 bis 30 Mole Wasser pro Mol Organosilan unterzogen. Besonders vorzugsweise verwendet man 0,5 bis 20 Mole Wasser; ganz besonders bevorzugt ist der Einsatz von 1 bis 5 Mole Wasser pro Mol der eingesetzten Silane.

Im Anschluß wird geeigneterweise mit Säure, einem Alkohol/Säure- oder einem Alkohol/Wasser/-Säure-Gemisch behandelt. Vorzugsweise verwendet man dabei Methanol, Ethanol, Propanol, Isopropanol, n-Butanol, i-Butanol, t-Butanol oder 2-Methoxyethanol als Alkohol.

Die Dosierung erfolgt bevorzugt portionsweise mit zeitlichen Unterbrechungen. Man kann den Vorgang der Dosierung aber auch kontinuierlich mit zeitlichen Unterbrechungen durchführen oder die diskontinuierliche und kontinuierliche Vorgehensweise der Dosierung miteinander in geeigneter Weise kombinieren.

Geeigneterweise wird der pH-Wert der Reaktionsmischung auf einen Wert zwischen 1 und 8, vorzugsweise auf einen Wert zwischen 1 und 6, besonders vorzugsweise auf einen Wert zwischen 1 und 5, eingestellt. Als Säurekomponente wird im allgemeinen eine anorganische oder organische Säure, vorzugsweise eine einbasige Säure, besonders vorzugsweise Salpetersäure oder Salzsäure oder Essigsäure oder Ameisensäure oder Gemische der vorgenannten Säuren, eingesetzt.

Die Umsetzung wird im allgemeinen in einem Temperaturbereich zwischen 0 und 100 °C, vorzugsweise in einem Temperaturbereich zwischen 10 und 80 °C und besonders vorzugsweise zwischen 20 und 60 °C, durchgeführt. Geeigneterweise erfolgt die Umsetzung unter Rühren.

Manchmal können während oder nach der Umsetzung Trübungen oder Ausfällungen auftreten. Um ein klares Produkt zu erhalten, wird geeigneterweise das erhaltene Produkt vor der Einstellung der gewünschten Konzentration sowie des pH-Wertes durch Sedimentation und/oder Filtration nachgereinigt. Die Filtration sowie die Entfernung des Sediments können beispielsweise über eine Drucknutsche, einen Separator, einen Dekanter oder ähnliche Apparate erfolgen.

Nach dem erfindungsgemäßen Verfahren hergestellte Produkte sind stabile und in der Regel klare Lösungen. Die erfindungsgemäßen Organopolysiloxan-haltigen Zusammensetzungen lassen sich mit Wasser und/oder Alkohol in jedem Verhältnis verdünnen und sind im wesentlichen frei von bedenklichen organischen Lösemitteln sowie Tensiden als Emulgatoren.

Die Verwendung der erfindungsgemäßen bzw. erfindungsgemäß hergestellten Zusammensetzungen erfolgt mit deutlichen Vorteilen gegenüber eingangs beschriebenen Produkten. Bei Anwendung der erfindungsgemäßen Zusammensetzung kann man in einfacher und hervorragender Weise zugleich eine hydrophobierende, oleophobierende, schmutz- sowie farbabweisende Wirkung auf den unterschiedlichsten Substratoberflächen, insbesondere auf Glas - z. B. Flachglas, Glasfasern, Glasperlen, Füllstoffen und Pigmenten, Metallen, Kunststoffen, Lacken und Farben, Textilfasern - einschließlich Baumwolle, Holz, Papier, Minaralfasern sowie mineralischen Baustoffen - z. B. Kalksandstein, Beton, Ziegel oder Keramik, erzielen. Darüber hinaus können die erfindungsgemäßen Zusammensetzungen auch als Trennmittel, als Vernetzer, als Haftvermittler, insbesondere für Fluorpolymere, wie z. B. Teflon oder auf Fluorpolymeren basierenden Lacken, sowie als Zusatzstoffe für Farben und Lacke Verwendung finden.

Gegenstand der vorliegenden Erfindung ist daher auch die Verwendung der erfindungsgemäßen Fluoralkyl-funktionellen, Organopolysiloxan-haltigen Zusammensetzungen auf Wasser/Alkohol-Basis für die gleichzeitige Hydrophobierung und Oleophobierung sowie zur schmutz- und farbabweisenden Ausrüstung von Oberflächen, von Metallen, von Kunststoffen, von mineralischen Baustoffen, für den Schutz von Bauten und Fassaden, für die Beschichtung von Glasfasern, für die Silanisierung von Füllstoffen und Pigmenten, für die Verbesserung der rheologischen Eigenschaften von Polymerdispersionen und Emulsionen, für die Hydrophobierung und Oleophobierung sowie zur schmutz- und farbabweisenden Ausrüstung von Textilien, Leder, Zellulose- und Stärkeprodukten sowie als Trennmittel, als Vernetzer, als Haftvermittler sowie als Zusatzstoffe für Farben und Lacke.

Die Erfindung wird durch die folgenden Beispiele näher erläutert:

### Beispiele

### Reaktionsapparatur für alle nachfolgenden Beispiele einschließlich Vergleichsbeispiel:

Laborrührkesselreaktor mit 2 l Inhalt, temperierbar, Innentemperaturmessung, Flüssigkeitsdosiereinrichtung, Destillationsbrücke mit Kopftemperaturmessung, Produktkühler, Destillatvorlagebehälter; Labordrucknutsche (2 1 Inhalt).

### Die in den erfindungsgemäßen Beispielen 1 und 2 gewonnenen Produkte haben folgende Eigenschaften gemeinsam:

Das Produkt ist klar und in jedem Verhältnis mit Wasser mischbar.

### Legende der Abkürzungen:

DYNASYLAN® 1203, AMEO, = 3-Aminopropyltriethoxysilan,
VPS 8161 = Tridecafluor-1,1,2,2-tetrahydrooctyl-1-trimethoxysilan
VPS 8261 = Tridecafluor-1,1,2,2-tetrahydrooctyl-1-triethoxysilan

### Beispiel 1

### Herstellung eines wasserlöslichen Cohydrolysates aus DYNASYLAN® 1203 und VPS 8161 im molaren Verhältnis 1:1

In der oben beschriebenen Apparatur mit einem 250 ml Rührreaktor werden 44,2 g DYNASYLAN 1203 und 93,4 g VPS 8161 vorgelegt. 14,4 g Wasser werden über die Dosiervorrichtung zugegeben. Die Temperatur steigt hierbei von 20 °C auf 30 °C. Das Reaktionsgemisch wird 3 Stunden bei 55 bis 60 °C gerührt. Anschließend wird das Reaktionsgemisch auf ca. 30 °C abgekühlt und innerhalb von ca. 10 Minuten werden 11,9 g Ameisensäure (85 Gew.-% in Wasser) zugegeben. Die Temperatur steigt dabei auf ca. 40 bis 50 °C an. Dieses Konzentrat ist in jedem Verhältnis mit Wasser mischbar.

### Beispiel 2:

### Herstellung eines wasserlöslichen Cohydrolysates aus DYNASYLAN® 1203 und VPS 8281 im molaren Verhältnis 1:1

In der oben beschriebenen Apparatur mit einem 250 ml Rührreaktor werden 44,2 g DYNASYLAN 1203 und 102 g VPS 8261 vorgelegt. 14,4 g Wasser werden über die Dosiervorrichtung zugegeben. Die Temperatur steigt hierbei von 20 ° C auf 30 °C. Das Reaktionsgemisch wird 3 Stunden bei 55 °C bis 60 °C gerührt. Anschließend wird das Reaktionsgemisch auf ca. 30 °C abgekühlt. Innerhalb von ca. 10 Minuten werden 11,9 g Ameisensäure (85 Gew.-% in Wasser) zugegeben. Die Temperatur steigt hierbei auf ca. 40 bis 50 °C an. Dieses Konzentrat ist in jedem Verhältnis mit Wasser mischbar. Das Produkt ist viskos. Durch Zugabe von Alkoholen (Methanol, Ethanol) kann die Viskosität deutlich gesenkt werden.

### Beispiel 3:

### Behandlung von mineralischen Oberflächen mit dem Produkt aus Beispiel 1

Ziegel-, Kalksand- und Betonsteine wurden in Quader mit einer Kantenlänge von ca. 5 cm geschnitten und ca. 5 Minuten in die wäßrige, erfindungsgemäße Zusammensetzung aus Beispiel 1 (in einer Weise mit Wasser verdünnt, daß eine 0,5 Gew.-% Lösung, bezogen auf das eingesetzte Fluoralkylalkoxysilan, resultiert) getaucht. Nach Trocknung der Steine bei Raumtemperatur oder im Trockenschrank bei ca. 120 °C dringt auf die Oberfläche der Steine aufgetragenes Wasser sowie auch Öl (Mineralöl, Thermoöl -Marlotherm S = Tritoluol- oder auch Siliconöl) nicht mehr in die Oberfläche der Baustoffe ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von mineralischen Baustoffen.

### Beispiel 3a:

### Behandlung von mineralischen Oberflächen mit dem Produkt aus Beispiel 1

Ziegel-, Kalksand- und Betonsteine wurden in Quader mit einer Kantenlänge von ca. 5 cm geschnitten und ca. 5 Minuten in die wäßrige, erfindungsgemäße Zusammensetzung aus Beispiel 1 (in einer Weise mit Wasser verdünnt, daß eine 10 Gew.-% Lösung, bezogen auf das eingesetzte Fluoralkylalkoxysilan, resultiert) getaucht. Nach Trocknung der Steine bei Raumtemperatur oder im Trockenschrank bei ca. 120 °C dringt auf die Oberfläche der Steine aufgetragenes Wasser sowie auch Öl (Mineralöl, Thermoöl -Marlotherm S = Tritoluol- oder auch Siliconöl) nicht mehr in die Oberfläche der Baustoffe ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von mineralischen Baustoffen.

### Beispiel 3b:

### Behandlung von mineralischen Oberflächen mit dem Produkt aus Beispiel 1

Ziegel-, Kalksand- und Betonsteine wurden in Quader mit einer Kantenlänge von ca. 5 cm geschnitten und ca. 5 Minuten in die wäßrige, erfindungsgemäße Zusammensetzung aus Beispiel 1 (in einer Weise mit Wasser verdünnt, daß eine 0,01 Gew.-% Lösung, bezogen auf das eingesetzte Fluoralkylalkoxysilan, resultiert) getaucht. Nach Trocknung der Steine bei Raumtemperatur oder im Trockenschrank bei ca. 120 °C dringt auf die Oberfläche der Steine aufgetragenes Wasser sowie auch Öl (Mineralöl, Thermoöl -Marlotherm S = Tritoluol- oder auch Siliconöl) nicht mehr in die Oberfläche der Baustoffe ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von mineralischen Baustoffen.

### Beispiel 3c:

### Behandlung von mineralischen Oberflächen mit dem Produkt aus Beispiel 1

Ziegel-, Kalksand- und Betonsteine wurden in Quader mit einer Kantenlänge von ca. 5 cm geschnitten und ca. 5 Minuten in die wäßrige, erfindungsgemäße Zusammensetzung aus Beispiel 1 (in einer Weise mit Wasser verdünnt, daß eine 0,005 Gew.-% Lösung, bezogen auf das eingesetzte Fluoralkylalkoxysilan, resultiert) getaucht. Nach Trocknung der Steine bei Raumtemperatur oder im Trockenschrank bei ca. 120 °C dringt auf die Oberfläche der Steine aufgetragenes Wasser sowie auch Öl (Mineralöl, Thermoöl -Marlotherm S = Tritoluol- oder auch Siliconöl) nach einigen Minuten in die Oberfläche der Baustoffe ein. Ein Abperleffekt für die genannten Flüssigkeiten ist zwar noch vorhanden, jedoch nur von kurzer Dauer. Bei unbehandelten Proben dringen die genannten Flüssigkeiten sofort in die Oberfläche ein. Das Produkt eignet sich damit eingeschränkt zur gleichzeitigen Hydro- und Oleophobierung von mineralischen Baustoffen.

### Beispiel 3d: (Vergleichsbeispiel)

### Behandlung von mineralischen Oberflächen mit dem Produkt aus Beispiel 1

Ziegel-, Kalksand- und Betonsteine wurden in Quader mit einer Kantenlänge von ca. 5 cm geschnitten und ca. 5 Minuten in die wäßrige, erfindungsgemäße Zusammensetzung aus Beispiel 1 (in einer Weise mit Wasser verdünnt, daß eine 0,001 Gew.-% Lösung, bezogen auf das eingesetzte Fluoralkylalkoxysilan, resultiert) getaucht. Nach Trocknung der Steine bei Raumtemperatur oder im Trockenschrank bei ca. 120 °C dringt auf die Oberfläche der Steine aufgetragenes Wasser sowie auch Öl (Mineralöl, Thermoöl -Marlotherm S = Tritoluol- oder auch Siliconöl) in die Oberfläche der Baustoffe ein. Ein Abperleffekt für die genannten Flüssigkeiten wird nicht mehr beobachtet. Bei unbehandelten Proben dringen die genannten Flüssigkeiten ebenfalls sofort in die Oberfläche ein. Das Produkt eignet sich damit nicht zur gleichzeitigen Hydro- und Oleophobierung von mineralischen Baustoffen.

### Beispiel 4:

### Behandlung von Baumwolle mit dem Produkt aus Beispiel 1

Baumwolle wurde in Quadrate mit einer Kantenlänge von ca. 5 cm geschnitten und ca. 5 Minuten in die wäßrige, erfindungsgemäße Zusammensetzung aus Beispiel 1 (in einer Weise mit Wasser verdünnt, daß eine 0,5 Gew.-% Lösung, bezogen auf das eingesetzte Fluoralkylalkoxysilan, resultiert) getaucht. Nach Trocknung der Stoffstücke bei Raumtemperatur oder im Trockenschrank bei ca. 120 °C dringt auf die Oberfläche der Stoffstücke aufgetragenes Wasser sowie auch Öl (Mineralöl, Thermoöl - Marlotherm S = Tritoluol- oder auch Siliconöl) nicht mehr in die Oberfläche der Stoffstücke ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von Baumwolle.

### Beispiel 5:

### Behandlung von Holz mit dem Produkt aus Beispiel 1

Eine ca. 0,5 cm starke Holzplatte wurde in Rechtecke mit einer Kantenlänge von ca. 3x5 cm geschnitten und ca. 5 Minuten in die wäßrige, erfindungsgemäße Zusammensetzung aus Beispiel 1 (in einer Weise mit Wasser verdünnt, daß eine 0,5 Gew.-% Lösung, bezogen auf das eingesetzte Fluoralkylalkoxysilan, resultiert) getaucht. Nach Trocknung der Holzstücke bei Raumtemperatur oder im Trockenschrank bei ca. 120 °C dringt auf die Oberfläche der Holzstücke aufgetragenes Wasser sowie auch Öl (Mineralöl, Thermoöl -Marlotherm S = Tritoluol- oder auch Siliconöl) nicht mehr in die Oberfläche der Holzstücke ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von Holz.

### Beispiel 6:

### Behandlung von Papier mit dem Produkt aus Beispiel 1

Papiertaschentücher wurden in Stücke mit einer Kantenlänge von ca. 5 cm geschnitten und ca. 5 Minuten in die wäßrige, erfindungsgemäße Zusammensetzung aus Beispiel 1 (in einer Weise mit Wasser verdünnt, daß eine 0,5 Gew.-% Lösung, bezogen auf das eingesetzte Fluoralkylalkoxysilan, resultiert) getaucht. Nach Trocknung der Papierstücke bei Raumtemperatur oder im Trockenschrank bei ca. 120 °C dringt auf die Oberfläche der Papierstücke aufgetragenes Wasser sowie auch Öl (Mineralöl, Thermoöl -Marlotherm S = Tritoluol- oder auch Siliconöl) nicht mehr in die Oberfläche der Papierstücke ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von Papier.

### Beispiel 7:

### Behandlung von Glas mit dem Produkt aus Beispiel 1

Glasscheiben mit einer Kantenlänge von ca. 10x20 cm wurden ca. 5 Minuten in die wäßrige, erfindungsgemäße Zusammensetzung aus Beispiel 1 (in einer Weise mit Wasser verdünnt, daß eine 0,5 Gew.-% Lösung, bezogen auf das eingesetzte Fluoralkylalkoxysilan, resultiert) getaucht. Nach Abtropfen und Trocknung der Glasscheiben bei Raumtemperatur oder im Trockenschrank bei ca. 120 °C perlt auf die Oberfläche der Glasscheiben aufgetragenes Wasser sowie auch Öl (Mineralöl, Thermoöl -Marlotherm S = Tritoluol- oder auch Siliconöl) deutlich ab. Der Randwinkel für die genannten Flüssigkeiten ist > 90 °. Bei unbehandelten Proben ist der Randwinkel deutlich kleiner als 90 °. Das Produkt hinterläßt auf der Glasscheibe einen Film und eignet sich zur gleichzeitigen Hydro- und Oleophobierung von Glas.

### Beispiel 8:

### Behandlung von Metalloberflächen mit dem Produkt aus Beispiel 1

Ca. 1 mm starke, sandgestrahlte Stahlplatten sowie Al-Folie mit einer Kantenlänge von ca. 10x20 cm wurden ca. 5 Minuten in die wäßrige, erfindungsgemäße Zusammensetzung aus Beispiel 1 (in einer Weise mit Wasser verdünnt, daß eine 0,5 Gew.-% Lösung, bezogen auf das eingesetzte Fluoralkylalkoxysilan, resultiert) getaucht. Nach Abtropfen und Trocknung der Stahlstücke bei Raumtemperatur oder im Trockenschrank bei ca. 120 °C perlt auf die Oberfläche der Stahlstücke aufgetragenes Wasser sowie auch Öl (Mineralöl, Thermoöl -Marlotherm S = Tritoluol- oder auch Siliconöl) deutlich ab. Das Produkt erzeugt einen Film auf der Metalloberfläche. Die visuell beurteilten Randwinkel sind bei den behandelten Metallproben deutlich höher als bei nicht behandelten. Das Produkt eignet sich damit zur gleichzeitigen Hydro- und Oleophobierung von Metalloberflächen. Lagerung beschichteter und unbeschichteter Stahlplatten in wäßriger HCl-Lösung zeigt eine deutlich geringere Korrosion bei den mit wäßriger Fluoralkylsilanlösung aus Beispiel 1 (in einer Weise mit Wasser verdünnt, daß eine 0,5 Gew.-% Lösung, bezogen auf das eingesetzte Fluoralkylalkoxysilan, resultiert) beschichteten Stahlplatten.

### Beispiel 9:

### Behandlung von Leder mit dem Produkt aus Beispiel 1

Saugfähiges Leder (Fensterleder) wurde ca. 5 Minuten in die wäßrige, erfindungsgemäße Zusammensetzung aus Beispiel 1 (in einer Weise mit Wasser verdünnt, daß eine 0,5 Gew.-% Lösung, bezogen auf das eingesetzte Fluoralkylalkoxysilan, resultiert) getaucht. Nach Trocknung der Lederstücke bei Raumtemperatur oder im Trockenschrank bei ca. 120 °C dringt auf die Oberfläche der Lederstücke aufgetragenes Wasser sowie auch Öl (Mineralöl, Thermoöl -Marlotherm S = Tritoluol- oder auch Siliconöl) nicht mehr in die Oberfläche der Lederstücke ein. Der Abperleffekt für die genannten Flüssigkeiten ist sehr gut. Bei unbehandelten Proben dringen die genannten Flüssigkeiten sofort in die Oberfläche ein. Das Produkt eignet sich damit zur gleichzeitigen Hydro- und Oleophobierung von Leder.

### Beispiel 10:

### Behandlung von Kunststoffoberflächen mit dem Produkt aus Beispiel 1

Ca. 1 mm starke MMA-Kunststoffplatten wurden ca. 5 Minuten in die wäßrige, erfindungsgemäße Zusammensetzung aus Beispiel 1 (in einer Weise mit Wasser verdünnt, daß eine 0,5 Gew.-% Lösung, bezogen auf das eingesetzte Fluoralkylalkoxysilan, resultiert) getaucht. Nach Abtropfen und Trocknung der Kunstoffplättchen bei Raumtemperatur oder im Trockenschrank bei ca. 90 °C perlt auf die Oberfläche der Kunststoffstücke aufgetragenes Wasser sowie auch Öl (Mineralöl, Thermoöl -Marlotherm S = Tritoluol- oder auch Siliconöl) deutlich ab. Der Abperleffekt für die genannten Flüssigkeiten ist sehr gut. Bei unbehandelten Proben ist der Randwinkel wesentlich geringer (visuelle Beurteilung). Das Produkt eignet sich damit zur gleichzeitigen Hydro- und Oleophobierung von Kunststoffoberflächen.

## Patentansprüche

1. Fluororgano-funktionelle Organopolysiloxan-haltige Zusammensetzung auf Wasser/Alkohol-Basis,
dadurch gekennzeichnet,
daß die Zusammensetzung Organopolysiloxane der allgemeinen Formel I
RO[Si(A)(CH₃)_{z}(OR)_{1-z}O]ₐ[Si(B)(R²)_{y}(OR)_{1-y}O]_{b}[Si(C)(CH₃)O]_{c}[Si(D)(OR)O]_{d}R•(HX)ₑ (I),
worin A einen Aminoalkyl-Rest, abgeleitet aus der allgemeinen Formel II
H₂N(CH₂)_{f}(NH)_{g}(CH₂)ₕSi(OR)_{3-z}(CH₃)_{z} (II),
wobei 0≤f≤6, g=0 falls f=0 und g=1 falls f>0, 0≤h≤6 und 0≤z≤1 sind,
und B einen Fluororgano-Rest, abgeleitet aus Tridecafluor-1,1,2,2-tetrahydrooctyl-1-trimethoxysilan oder Tridecafluor-1,1,2,2-tetrahydrooctyl-1-triethoxysilan oder aus der allgemeinen Formel III
R¹-Y-(CH₂)₂Si(R²)_{y}(OR)_{3-y} (III),
wobei R¹ eine mono-, oligo- oder perfluorierte Alkyl-Gruppe mit 1 bis 9 C-Atomen oder eine mono-, oligo- oder perfluorierte Aryl-Gruppe oder eine R^{f}CH₂CH₂(C=O)-Gruppe mit R^{f} = CₙF₂ₙ₊₁ und n = 2 bis 18, Y eine CH₂-, O- oder S-Gruppe, R² eine lineare, verzweigte oder cyclische Alkyl-Gruppe mit 1 bis 8 C-Atomen oder eine Aryl-Gruppe bedeuten und 0≤y≤1 ist,
und C einen Alkyl-Rest, abgeleitet aus der allgemeinen Formel IV
R³-Si(CH₃)(OR)₂ (IV),
und D ebenfalls einen Alkyl-Rest, jedoch abgeleitet aus der allgemeinen Formel V
R³-Si(OR)₃ (V),
wobei R³ in den vorangegangenen Formeln eine lineare, verzweigte oder cyclische Alkyl-Gruppe mit 1 bis 8 C-Atomen bedeutet, R³ in den vorangegangenen Formeln jeweils gleich oder verschieden ist,
R in den vorangegangenen Formeln eine lineare, verzweigte oder cyclische Alkyl-Gruppe mit 1 bis 8 C-Atomen oder eine Aryl-Gruppe bedeutet und R in den vorangegangenen Formeln jeweils gleich oder verschieden ist,
und HX eine Säure darstellen, wobei X ein anorganischer oder organischer Säure-Rest ist,
und 0≤y≤1, 0≤z≤1, a>0, b>0, c≥0, d≥0, e≥0 und (a+b+c+d)≥2 sind,
enthält, wobei das molare Verhältnis M = [a/(b+c+d)]≥0,1 ist und der Gehalt an Fluororgano-funktionellen Wirkstoffen in der Zusammensetzung 0,005 Gew.-% bis 85 Gew.-% beträgt.

2. Zusammensetzung nach Anspruch 1,
dadurch gekennzeichnet,
daß diese einen pH-Wert zwischen 1 und 8 besitzt.

3. Zusammensetzung nach Anspruch 1 oder 2,
dadurch gekennzeichnet,
daß diese eine einwertige anorganische und/oder organische Säure und/oder deren Folgeprodukte enthält.

4. Zusammensetzung nach mindestens einem der Ansprüche 1 bis 3,
dadurch gekennzeichnet,
daß der freie Alkohol-Gehalt in der Zusammensetzung 3 bis 50 Gew.-% beträgt.

5. Zusammensetzungen nach mindestens einem der Ansprüche 1 bis 4, erhältlich durch
- Mischen wasserlöslicher Organosilane der allgemeinen Formel II
H₂N(CH₂)_{f}(NH)_{g}(CH₂)ₕ-Si(CH₃)_{z}(OR)_{3-z} (II),
worin 0≤f≤6, g=0 falls f=0 und g=1 falls f>1, 0≤h≤6, 0≤z≤1 und
R eine lineare, verzweigte oder cyclische Alkyl-Gruppe mit 1 bis 8 C-Atomen oder Aryl-Gruppe sind,
mit Tridecafluor-1,1,2,2-tetrahydrooctyl-1-trimethoxysilan oder mit Tridecafluor-1,1,2,2-tetrahydrooctyl-1-triethoxysilan oder mit Fluororgano-funktionellen Organosilanen der allgemeinen Formel III
R¹-Y-(CH₂)₂Si(R²)_{y}(OR)_{3-y} (III),
worin R¹ eine mono-, oligo- oder perfluorierte Alkyl-Gruppe mit 1 bis 9 C-Atomen oder eine mono-, oligo- oder perfluorierte Aryl-Gruppe oder eine R^{f}CH₂CH₂(C=O)-Gruppe mit R^{f} = CₙF₂ₙ₊₁ und n = 2 bis 18, Y eine CH₂-, O- oder S-Gruppe, R² eine lineare, verzweigte oder cyclische Alkyl-Gruppe mit 1 bis 8 C-Atomen oder eine Aryl-Gruppe und R eine lineare, verzweigte oder cyclische Alkyl-Gruppe mit 1 bis 8 C-Atomen oder eine Aryl-Gruppe darstellen und 0≤y≤1 ist,
und gegebenenfalls Organosilane der allgemeinen Formel IV
R³-Si(CH₃)(OR)₂ (IV),
und/oder Organosilane der allgemeinen Formel V
R³-Si(OR)₃ (V),
worin R³ hier und in der vorangegangenen Formel eine lineare, verzweigte oder cyclische Alkyl-Gruppe mit 1 bis 8 C-Atomen bedeutet, R³ hier und in der vorangegangenen Formel jeweils gleich oder verschieden ist, R hier und in der vorangegangenen Formel eine lineare, verzweigte oder cyclische Alkyl-Gruppe mit 1 bis 8 C-Atomen oder eine Aryl-Gruppe bedeutet und R jeweils gleich oder verschieden ist,
- in dem molaren Verhältnis M = [a/(b+c+d)]≥ 0,1 mit a>0, b>0, c≥0, d≥0,
wobei a die Summe der Molzahlen der Organosilane gemäß Formel II, b die Summe der Molzahlen der Organosilane gemäß Formel III sowie gegebenenfalls c die Summe der Molzahlen der Organosilane gemäß Formel IV sowie d gegebenenfalls die Summe der Molzahlen der Organosilane gemäß Formel V sind,
- Versetzen des Gemisches mit Wasser oder einem Wasser/Säure-Gemisch und/oder einem Wasser/Säure/Alkohol-Gemisch und
- Einstellen des pH-Wertes der Reaktionsmischung auf einen Wert zwischen 1 und 8.

6. Verfahren zur Herstellung einer Fluororgano-funktionellen Polysiloxan-haltigen Zusammensetzung nach mindestens einem der Ansprüche 1 bis 5,
dadurch gekennzeichnet,
daß man
- a Mol wasserlösliche Organosilane der allgemeinen Formel II,
b Mol Organosilane der allgemeinen Formel III oder Tridecafluor-1,1,2,2-tetrahydrooctyl-1-trimethoxysilan oder Tridecafluor-1,1,2,2-tetrahydrooctyl-1-triethoxysilan sowie gegebenenfalls
c Mol Organosilane der allgemeinen Formeln IV und/oder gegebenenfalls
d Mol Organosilane der allgemeinen Formel V
- in dem molaren Verhältnis 0,1 ≤ [a/(b+c+d)] mit a>0, b>0, c≥0, d≥0 mischt,
- das Organosilangemisch mit Wasser oder einem Wasser/Säure-Gemisch und/oder einem Wasser/Säure/Alkohol-Gemisch vermischt,
wobei man die Säuremenge so wählt, daß die Reaktionsmischung einen pH-Wert im Bereich von 1 bis 8 aufweist,
- und nach einer Reaktionszeit von 0,5 bis 24 Stunden, die Wirkstoffkonzentration durch Zugabe von Alkohol oder Wasser oder einem Alkohol/Wasser-Gemisch einstellt.

7. Verfahren nach Anspruch 6,
dadurch gekennzeichnet,
daß man die eingesetzten Organosilane mit 0,5 bis 30 Molen anteiligem Wasser pro Mol Organosilan cokondensiert.

8. Verfahren nach Anspruch 6 oder 7,
dadurch gekennzeichnet,
daß man eine einbasige Säure einsetzt.

9. Verfahren nach mindestens einem der Ansprüche 6 bis 8,
dadurch gekennzeichnet,
daß man die Umsetzung in einem Temperaturbereich zwischen 0 und 100 °C durchführt.

10. Verfahren nach mindestens einem der Ansprüche 6 bis 9,
dadurch gekennzeichnet,
daß man das erhaltene Produkt durch Sedimentation und/oder Filtration nachreinigt.

11. Verwendung Fluororgano-funktioneller Organopolysiloxan-haltiger Zusammensetzungen auf Wasser/Alkohol-Basis nach den Ansprüchen 1 bis 10 für die gleichzeitige Hydrophobierung und Oleophobierung sowie zur schmutz- und farbabweisenden Ausrüstung von Oberflächen, von Metallen, von Kunststoffen, von mineralischen Baustoffen, für den Schutz von Bauten und Fassaden, für die Beschichtung von Glasfasern, für die Silanisierung von Füllstoffen und Pigmenten, für die Verbesserung der rheologischen Eigenschaften von Polymerdispersionen und Emulsionen, für die Hydrophobierung und Oleophobierung sowie zur schmutz- und farbabweisenden Ausrüstung von Textilien, Leder, Zellulose- und Stärkeprodukten sowie als Trennmittel, als Vernetzer, als Haftvermittler sowie als Zusatzstoffe für Farben und Lacke.

## Claims

1. A fluoroorgano-functional organopolysiloxane-containing composition based on water/alcohol,
characterized in that
the composition comprises organopolysiloxanes of the general formula I
RO[Si(A)(CH₃)_{z}(OR)_{1-z}O]ₐ[Si(B)(R²)_{y}(OR)_{1-y}O]_{b}[Si(C)(CH₃)O]_{c}[Si(D)(OR)O]_{d}R·(HX)ₑ (I)
in which A is an aminoalkyl radical derived from the general formula II
H₂N(CH₂)_{f}(NH)_{g}(CH₂)ₕSi(OR)_{3-z}(CH₃)_{z} (II)
in which 0≤f≤6, g=0 if f=0 and g=1 if f>0, 0≤h≤6 and 0≤z≤1,
and B is a fluoroorgano radical derived from tridecafluoro-1,1,2,2-tetrahydrooct-1-yl trimethoxysilane or tridecafluoro-1,1,2,2-tetrahydrooct-1-yl triethoxysilane or from the general formula III
R¹-Y-(CH₂)₂Si(R²)_{y}(OR)_{3-y} (III)
in which R¹ is a mono-, oligo- or perfluorinated alkyl group having 1 to 9 C atoms or a mono-, oligo- or perfluorinated aryl group or an R^{f}CH₂CH₂(C=O) group where R^{f} = CₙF₂ₙ₊₁ and n = 2 to 18, Y is a CH₂, O or S group, R² is a linear, branched or cyclic alkyl group having 1 to 8 C atoms or an aryl group and 0≤y≤1,
and C is an alkyl radical derived from the general formula IV
R³-Si(CH₃)(OR)₂ (IV)
and D is also an alkyl radical, but derived from the general formula V
R³-Si(OR)₃ (V)
in which R³ in the preceding formulae is a linear, branched or cyclic alkyl group having 1 to 8 C atoms, R³ in the preceding formulae is in each case identical or different,
R in the preceding formulae is a linear, branched or cyclic alkyl group having 1 to 8 C atoms or an aryl group and R in the preceding formulae is in each case identical or different,
and HX is an acid, in which X is an inorganic or organic acid radical,
and 0≤y≤1, 0≤z≤1, a>0, b>0, c≥0, d≥0, e≥0 and (a+b+c+d)≥2,
in which the molar ratio M = [a/(b+c+d)]≥0.1 and the content of fluoroorgano-functional active compounds in the composition is 0.005 % by weight to 85 % by weight.

2. A composition according to claim 1,
which
has a pH of from 1 to 8.

3. A composition according to claim 1 or 2,
which
comprises a monobasic inorganic and/or organic acid and/or secondary products thereof.

4. A composition according to at least one of claims 1 to 3,
characterized in that
the free alcohol content in the composition is from 3 to 50 % by weight.

5. A composition according to at least one of claims 1 to 4, obtainable by
- mixing water-soluble organosilanes of the general formula II
H₂N(CH₂)_{f}(NH)_{g}(CH₂)ₕ-Si(CH₃)_{z}(OR)_{3-z} (II)
in which 0≤f≤6, g=0 if f=0 and g=1 if f>1, 0≤h≤6, 0≤z≤1 and R is a linear, branched or cyclic alkyl group having 1 to 8 C atoms or an aryl group,
with tridecafluoro-1,1,2,2-tetrahydro-oct-1-yl trimethoxysilane or with tridecafluoro-1,1,2,2-tetrahydro-oct-1-yl triethoxysilane or with fluoroorgano-functional organosilanes of the general formula III
R¹-Y-(CH₂)₂Si(R²)_{y}(OR)_{3-y} (III)
in which R¹ is a mono-, oligo- or perfluorinated alkyl group having 1 to 9 C atoms or a mono-, oligo- or perfluorinated aryl group or an R^{f}CH₂CH₂(C=O) group where R^{f} = CₙF₂ₙ₊₁ and n = 2 to 18, Y is a CH₂, O or S group, R² is a linear, branched or cyclic alkyl group having 1 to 8 C atoms or an aryl group and R is a linear, branched or cyclic alkyl group having 1 to 8 C atoms or an aryl group and 0≤y≤1,
and, if desired, organosilanes of the general formula IV
R³-Si(CH₃)(OR)₂ (IV)
and/or organosilanes of the general formula V
R³-Si(OR)₃ (V)
in which R³ here and in the preceding formula is a linear, branched or cyclic alkyl group having 1 to 8 C atoms, R³ here and in the preceding formula is in each case identical or different, R here and in the preceding formula is a linear, branched or cyclic alkyl group having 1 to 8 C atoms or an aryl group and R is in each case identical or different,
- in a molar ratio of M = [a/(b+c+d)]≥0.1 where a>0, b>0, c≥0, d≥0,
in which a is the sum of the numbers of moles of the organosilanes according to formula II, b is the sum of the numbers of moles of the organosilanes according to formula III and, if desired, c is the sum of the numbers of moles of the organosilanes according to formula IV and d, if desired, is the sum of the numbers of moles of the organosilanes according to formula V,
- adding water or a water/acid mixture and/or a water/acid/alcohol mixture to the mixture and
- adjusting the pH of the reaction mixture to a value of from 1 to 8.

6. A process for the preparation of a fluoroorganofunctionalpolysiloxane-containing composition according to at least one of claims 1 to 5,
characterized in that
- a moles of water-soluble organosilanes of the general formula II
b moles of organosilanes of the general formula II or tridecafluoro-1,1,2,2-tetrahydrooct-1-yl trimethoxysilane or tridecafluoro-1,1,2,2-tetrahydrooct-1-yl triethoxysilane and, if desired,
c moles of organosilanes of the general formula IV and/or, if desired,
d moles of organosilanes of the general formula V
- are mixed in a molar ratio of 0.1 ≤ [a/(b+c+d)] where a>0, b>0, c≥0, d≥0,
- the organosilane mixture is mixed with water or a water/acid mixture and/or a water/acid/alcohol mixture, the amount of acid being chosen such that the reaction mixture has a pH in the range from 1 to 8,
- and, after a reaction time of from 0.5 to 24 hours, the active compound concentration is adjusted by addition of alcohol or water or a water/alcohol mixture.

7. A process according to claim 6,
characterized in that
the organosilanes employed are cocondensed with a proportion of from 0.5 to 30 moles of water per mole of organosilane.

8. A process according to claim 6 or 7,
characterized in that
a monobasic acid is employed.

9. A process according to at least one of claims 6 to 8,
characterized in that
the reaction is carried out in a temperature range of from 0 to 100°C.

10. A process according to at least one of claims 6 to 9,
characterized in that
the resulting product is after-purified by sedimentation and/or filtration.

11. The use of a fluoroorgano-functional organopolysiloxane-containing composition based on water/alcohol according to any of claims 1 to 10 for simultaneous hydrophobizing and oleophobizing and for dirt- and color-repellent treatment of surfaces, of metals, of plastics and of mineral building materials, for protecting buildings and facades, for coating glass fibres, for silanizing fillers and pigments, for improving the rheological properties of polymer dispersions and emulsions, for hydrophobizing and oleophobizing and for dirt- and color-repellent treatment of textiles, leather and cellulose and starch products and as a release agent, as a crosslinking agent, as an adhesion promoter and as an additive for paints and coatings.

## Revendications

1. Composition contenant un organopolysiloxane fonctionnalisé par un organofluor, à base d'eau/d'alcool,
caractérisé en ce que
la composition renferme des organopolysiloxanes de formule générale I,
RO[Si(A)(CH₃)_{z}(OR)_{1-z}O]ₐ[Si(B)(R²)_{y}(OR)_{1-y}O]_{b}[Si(C)(CH₃)O]_{c}[Si(D)(OR)O]_{d}R·(HX)ₑ (I)
dans laquelle :
A représente un radical aminoalkyle dérivé de la formule générale II
H₂N(CH₂)_{f}(NH)_{g}(CH₂)ₕSi(OR)_{3-z}(CH₃)_{z} (II)
dans laquelle
0≤f≤6, g=0 quand f=0 et g=1 quand f>0, 0≤h≤6 et 0≤z≤1
B représente un radical organofluor dérivé du tridécafluoro 1,1,2,2-tétrahydrooctyl-1-triméthoxysilane, ou du tridécafluoro-1,1,2,2-tétrahydrooctyl-1- triéthoxysilane ou de la formule générale III,
R¹-Y-(CH₂)₂Si(R²)_{y}(OR)_{3-y} (III)
dans laquelle :
R¹ signifie un groupe alkyle mono-, oligo, ou perfluoré ayant de 1 à 9 atomes de carbone ou un groupe aryle mono-, oligo- ou perfluoré ou un groupe R^{f}CH₂CH₂(C=O) avec R^{f}=CₙF₂ₙ₊₁ et n=2 à 18,
Y signifie un groupe CH₂-, O- ou S-, R² est un groupe alkyle linéaire, ramifié ou cyclique ayant de 1 à 8 atomes de carbone ou un groupe aryle, et 0≤y≤1, et
C représente un radical alkyle dérivé de la formule générale IV,
R³-Si(CH₃)(OR)₂ (IV)
D représente également un radical alkyle cependant dérivé de la formule générale V,
R³-Si(OR)₃ (V)
dans lesquelles R³ signifie un groupe alkyle linéaire, ramifié ou cyclique ayant de 1 à 8 atomes de carbone, R³ dans les formules précédentes à chaque fois est identique ou différent.
R dans les formules précédentes signifie un groupe alkyle linéaire, ramifié ou cyclique ayant de 1 à 8 atomes de carbone ou un groupe aryle, et R à chaque fois est identique ou différent, et
HX représente un acide dans lequel X est un reste d'acide minéral ou organique et,
0≤y≤1, 0≤z≤1, a>0, b>0, c≥0, d≥0, e≥0 et (a+b+c+d)≥2,
dans laquelle le rapport molaire M = [a/(b+c+d)]≥0,1 et la teneur en principes actifs fonctionnalisés par un organofluoro s'élève dans la composition de 0,005 % en poids à 85 % en poids.

2. Composition selon la revendication 1,
caractérisée en ce que
celle-ci possède une valeur pH comprise entre 1 et 8.

3. Composition selon la revendication 1 ou la revendication 2,
caractérisée en ce que
celle-ci contient un acide monovalent minéral et/ou organique et/ou leurs produits dérivés.

4. Composition selon au moins une des revendications 1 à 3,
caractérisée en ce que
la teneur en alcool libre dans la composition est de 3 à 50 % en poids.

5. Composition selon au moins l'une des revendications 1 à 4, obtenue par les étapes suivantes :
- mélange d'organosilanes solubles dans l'eau de formule générale II,
H₂N(CH₂)_{f}(NH)_{g}(CH₂)ₕ-Si(CH₃)_{z}(OR)_{3-z} (II)
dans laquelle
0≤f≤6, g=0 quand f=0 et g=1 quand f>1, 0≤h≤6, 0≤z≤1 et
R est un groupe alkyle linéaire, ramifié ou cyclique ayant de 1 à 8 atomes de carbone ou un groupe aryle, avec le tétradécafluoro-1,1,2,2-tétrahydrooctyl-1-triméthoxysilane ou avec le tétradécafluoro-1,1,2,2-tétrahydrooctyl-1-triéthoxysilane ou avec des organosilanes fonctionnalisés par un organofluoro de formule générale III,
R¹-Y-(CH₂)₂Si(R²)_{y}(OR)_{3-y} (III)
dans laquelle :
R¹ représente un groupe alkyle mono-, oligo- ou perfluoré ayant de 1 à 9 atomes de carbone ou un groupe aryle mono, oligo- ou perfluoré ou un groupe R^{f}CH₂CH₂(C=O) avec R^{f}=CₙF₂ₙ₊₁ et n= 2 à 18, Y représente un groupe CH2-, O- ou S-,
R² représente un groupe alkyle linéaire, ramifié ou cyclique ayant de 1 à 8 atomes de carbone ou un groupe aryle et R représente un groupe alkyle linéaire, ramifié ou cyclique ayant de 1 à 8 atomes de carbone ou un groupe aryle et, 0≤y≤1,
et avec le cas échéant des organosilanes de formule générale IV,
R³-Si(CH₃)(OR)₂ (IV)
et/ou avec des organosilanes de formule générale V,
R³-Si(OR)₃ (V)
dans lesquelles :
R³ ici et dans la formule précédente signifie un groupe alkyle linéaire, ramifié, ou cyclique ayant de 1 à 8 atomes de carbone,
R³ ici et dans la formule précédente est à chaque fois identique ou différent,
R ici et dans la formule précédente signifie un groupe alkyle linéaire, ramifié ou cyclique ayant de 1 à 8 atomes de carbone ou un groupe aryle et R à chaque fois est identique ou différent,
- mélange dans lequel le rapport molaire M est, M = [a/(b+c+d)]≥0,1 avec a>0, b>0, c≥0, d≥0, pour lequel a est la somme des nombres de moles des organosilanes conformément à la formule II, b la somme des nombres de moles des organosilanes conformément à la formule III ainsi que, le cas échéant, c est la somme des nombres de moles des organosilanes conformément à la formule IV, ainsi que éventuellement d est la somme des nombres de moles des organosilanes conformément à la formule V,
- addition du mélange à de l'eau ou à un mélange eau/acide et/ou un mélange eau/acide/alcool,
- ajustement de la valeur du pH du mélange réactionnel à une valeur comprise entre 1 et 8.

6. Procédé de préparation d'une composition contenant un polysiloxane fonctionnalisé par un organofluor selon au moins l'une des revendications 1 à 5,
caractérisé en ce qu'
on mélange :
- a mole d'organosilane soluble dans l'eau de formule générale II,
b mole d'organosilane de formule générale III ou du tridécafluoro-1,1,2,2-tétrahydrooctyl-1-triméthoxysilane ou le tridécafluoro-1,1,2,2-tétrahydrooctyl-1-triéthoxysilane ainsi qu'éventuellement,
c mole d'organosilane de formule générale IV ainsi qu'éventuellement,
d mole d'organosilane de formule générale V
- dans le rapport molaire 0,1≤[a/(b+c+d)] avec a>0, b>0, c≥0 et d≥0,
- on dilue le mélange d'organosilane avec de l'eau ou un mélange eau/acide et/ou un mélange eau/acide/alcool, dans lequel on choisit la quantité d'acide de telle sorte que le mélange réactionnel possède une valeur de pH dans la zone de 1 à 8 et,
- après un temps de réaction de 0,5 à 24 heures on ajuste la concentration en principes actifs par addition d'alcool ou d'eau ou d'un mélange alcool/eau.

7. Procédé selon la revendication 6,
caractérisé en ce qu'
on co-condense l'organosilane mis en oeuvre avec 0,5 à 30 moles d'eau par mole d'organosilane.

8. Procédé selon l'une des revendications 6 ou 7,
caractérisé en ce qu'
on met en oeuvre un acide monobasique.

9. Procédé selon au moins l'une des revendications 6 à 8,
caractérisé en ce qu'
on effectue la réaction dans une plage de températures comprise entre 0 et 100°C.

10. Procédé selon au moins une des revendications 6 à 9,
caractérisé en ce qu'
on repurifie le produit obtenu par sédimentation et/ou filtration.

11. Utilisation de composition contenant un organopolysiloxane fonctionnalisé par un organofluor à base d'eau/d'alcool selon les revendications 1 à 10 pour l'hydrophobisation et l'oléophobisation simultanées ainsi que pour l'apprêt anti-salissure et anti-coloration de surfaces, de métaux, de matières plastiques, de substances minérales de construction, pour la protection de bâtiments et de façades, pour le revêtement de fibres de verre, pour la silanisation de substances de remplissage et de pigments, pour l'amélioration des propriétés rhéologiques de dispersions de polymères et d'émulsions, pour l'hydrophobisation et l'oléophobisation ainsi que pour l'apprêt anti-salissure et anti-coloration des textiles, du cuir, des produits cellulosiques et des produits de l'amidon, ainsi que comme agent de séparation, agent mouillant, adjuvant d'adhésion, additifs pour des couleurs et des laques.
